# EUROPEAN PATENT APPLICATION

(11) **EP 4 775 395 A1**
(43) Date of publication of application: **15.07.2026**
(21) Application number: 24862507.1
(22) Date of filing: 08.08.2024
(51) Int. Cl.: B32B 27/18, B32B 27/32, C23F 11/00

(54) **MULTILAYER RUST PREVENTIVE FILM**

(30) Priority: 06.09.2023 JP 2023144634
(71) Applicant: Aicello Corporation, Toyohashi-shi, Aichi 441-1115 (JP)
(72) Inventor: SAWADA, Shiro, Toyohashi-shi, Aichi 441-1115 (JP)
(74) Representative: Meissner Bolte Partnerschaft mbB
(86) International application number: PCT/JP2024/028368
(87) International publication number: WO 2025/052853

(57) **Abstract**

The present invention addresses the problem of: preventing a metal film from being deteriorated with respect to properties required for use as a rust-preventive film even when the metal film is stored for a long period of time under a high temperature; and achieving rust prevention properties at the same levels as those achieved in normal use, in circumstances where the rust prevention properties are required under harsh environmental conditions or in situations where it is difficult to perform careful handling, and additionally in circumstances where rust prevention properties are required for a long period of time. As a solution, the present invention provides a multilayer rust preventive film which includes the resin layer 1 and the resin layer 2 described below. Resin layer 1: a layer which contains calcium nitrite particles that have an average particle diameter of 50 µm or more and a high-density polyethylene that has a density of 0.945 g/cm³ or more Resin layer 2: a layer which contains a low-density polyethylene and/or a linear low-density polyethylene

## Description

### TECHNICAL FIELD

The present invention relates to a multilayer rust preventive film.

### BACKGROUND ART

As described in Examples of Patent Literature 1, a multilayer rust preventive film having a resin layer formed by adding sodium nitrite to low-density polyethylene is known.

It is said that the multilayer rust preventive film according to this invention exhibits a rust-preventing effect without specifying a storage state after production and before use. In Examples, it is assumed that the multilayer rust preventive film is used as it is in a state immediately after production.

### CITATION LIST

### PATENT LITERATURE

Patent Literature 1: JP 2019-131267A

### SUMMARY OF INVENTION

### TECHNICAL PROBLEM

By employing a multilayer sheet composed of two layers as a multilayer rust preventive film for housing metal products and the like, it is possible to exhibit a rust-preventing effect for a longer period of time. However, in recent years, it has been required that the properties of the rust preventive film are not deteriorated even by long-term storage at a high temperature, and that the rust preventive film exhibits the same rust-preventing property as usual in the case where the rust-preventing property is required even in a severe environment or in a situation where it is difficult to handle the film with attention, and in the case where the rust-preventing property is required for a long period of time.

In such a situation, the conventional rust preventive film cannot exhibit sufficient rust-preventing properties.

### SOLUTION TO PROBLEM

As a result of intensive studies to solve the above problems, the inventors of the present invention have found that the problems can be solved by the following means and have thus completed the present invention.
1. A multilayer rust preventive film containing the following resin layer 1 and resin layer 2:
   resin layer 1: a layer containing calcium nitrite particles having an average particle diameter of 50 µm or more and a high-density polyethylene having a density of 0.945 g/cm3 or more, and
   resin layer 2: a layer containing a low-density polyethylene and/or a linear low-density polyethylene.
2. The multilayer rust preventive film according to the above 1, containing the following resin layer 3 at the resin layer 2 side:
   resin layer 3: a layer containing calcium nitrite particles having an average particle diameter of 50 µm or more and a low-density polyethylene and/or a linear low-density polyethylene.
3. The multilayer rust preventive film according to the above 1 or 2, in which the resin layer 2 contains an amine/ammonium salt.
4. The multilayer rust preventive film according to any one of the above 1 to 3, in which, the resin layer 1 has a thickness of 15 to 45 when the thickness of the multilayer rust preventive film is 100.

### ADVANTAGEOUS EFFECTS OF INVENTION

According to the multilayer rust preventive film of the present invention containing a calcium nitrite salt having a specific particle diameter, a container, a sheet-like article, or a bag-shaped article, at least a part of which is composed of the multilayer rust preventive film, can maintain a rust-preventing effect for a longer period of time by storing a product such as a metal product that may rust as a content or by being packaged with such a product. Therefore, it is possible to reliably prevent the generation of rust over a longer period of time when the metal product is transported and stored.

Furthermore, even in the case where the storage conditions before use are high temperature, the multilayer rust preventive film has excellent rust-preventing properties during use and can exhibit sufficient rust-preventing properties even in a severe use environment, and specifically, the VIA test after the fatigue test of the multilayer rust preventive film and the rust-preventing properties of the space can be improved.

### DESCRIPTION OF EMBODIMENTS

The present invention is a multilayer rust preventive film, and this multilayer rust preventive film may have a substrate layer.

Hereinafter, the present invention will be described.

In the present invention, the density of the resin was measured according to the method specified in Method A of JIS K7112: 1999.

In the present specification, calcium nitrite, potassium nitrite, and sodium nitrite may be referred to as Ca nitrite, K nitrite, and Na nitrite, respectively.

Each of the resin layer 1, the resin layer 2, and the resin layer 3 in the present invention may be composed of one layer or a plurality of layers.

### (Multilayer Rust Preventive Film)

The multilayer rust preventive film of the present invention is a multilayer rust preventive film having a resin layer 1 and a resin layer 2. However, a plurality of resin layers 1 may be provided, and a plurality of resin layers 2 may be provided.

In the case where the resin layer 1 is composed of two or more layers, calcium nitrite, resin, and the like contained in each layer can be independently determined. Note that each of these layers needs to satisfy the requirements regarding the multilayer rust preventive film of the present invention. In the case where the resin layer 2 is composed of two or more layers, the low-density polyethylene and/or linear low-density polyethylene, and the like contained in each layer can be independently determined.

Note that each of these layers needs to satisfy the requirements regarding the multilayer rust preventive film of the present invention.

### [Resin Layer 1]

The resin layer 1 is a layer containing calcium nitrite particles having an average particle diameter of 50 µm or more and a high-density polyethylene having a density of 0.945 g/cm³ or more. The resin layer 1 may be formed of one layer, or a plurality of resin layers 1 may be laminated to form the resin layer 1 as a whole. In the case where the plurality of resin layers 1 are laminated, each resin layer 1 can independently determine the average particle diameter and content of the calcium nitrite particles to be contained, the type of the high-density polyethylene having a density of 0.945 g/cm³ or more, and the composition of the resin.

From the viewpoint of mechanical strength and processability, the melt flow rate value (MFR) is preferably 1.0 g/10 min or more, more preferably 3.0 g/10 min or more, and still more preferably 4.0 g/10 min or more. The melt flow rate value is also preferably 10.0 g/10 min or less, more preferably 8.0 g/10 min or less, and still more preferably 7.0 g/10 min or less. Within this range, an appropriate viscosity can be exhibited during melt processing while ensuring an appropriate strength. Accordingly, it is possible to include and coat particulate calcium nitrite in the resin, and it is possible to prevent the rust-preventing agent from falling off from the resin molded body.

### (Calcium Nitrite Particles Having Average Particle Diameter of 50 µm or more Contained in Resin Layer 1)

The resin layer 1 contains calcium nitrite particles having an average particle diameter of 50 µm or more. The content of the calcium nitrite particles in 100 parts by weight of the resin layer 1 is preferably 0.01 parts by weight or more, more preferably 0.10 parts by weight or more, still more preferably 0.50 parts by weight or more, and most preferably 1.00 parts by weight or more. Further, the content is preferably 10.00 parts by weight or less, more preferably 5.00 parts by weight or less, still more preferably 3.00 parts by weight or less, and most preferably 2.50 parts by weight or less. In the case where the content is less than 0.01 parts by weight, it is difficult to exhibit a sufficient rust-preventing property, and in the case where the content is more than 10.00 parts by weight, molding becomes difficult.

The average particle diameter of the calcium nitrite particles is 50 µm or more, preferably 55 µm or more, and more preferably 60 µm or more. The average particle diameter is preferably 150 µm or less, and more preferably 140 µm or less. In the case where the average particle diameter is 50 µm or more, an excellent effect is exhibited in the VIA test after the fatigue test.

It is preferable not to contain a potassium salt, a sodium salt or a magnesium salt of nitrite, but they may be contained without limiting the average particle diameter to the extent that the effect of the present invention is not impaired. In the case of containing these metal nitrite, the content thereof is, for example, preferably 0.01 parts by weight or more and preferably 1.0 parts by weight or less in 100 parts by weight of the resin layer to be contained. In the case where the content is more than 1.0 parts by weight, molding becomes difficult.

The average particle diameter of the calcium nitrite particles is a value of the major axis D50 of the calcium nitrite particles before being blended into the resin layer.

In the present invention, by using calcium nitrite particles and by using a high-density polyethylene having a density of 0.945 g/cm³ or more in combination as a resin, the decrease in the amount of calcium nitrite was suppressed even after storage under an atmosphere of 60°C for 288 hours, and the same rust-preventing function as that of a new product was exhibited.

On the other hand, in the case where calcium nitrite particles having a D50 of 50 µm or more were dispersed in polyethylene having a density of less than 0.945 g/cm³, the amount of calcium nitrite was reduced after storage in an atmosphere at 60°C for 288 hours.

Furthermore, in the case where calcium nitrite particles having a D50 of less than 50 µm were dispersed in the high-density polyethylene having a density of 0.945 g/cm³ or more, the amount of calcium nitrite was reduced after storage in an atmosphere at 60°C for 288 hours.

### (Resin Constituting Resin Layer 1)

The resin constituting the resin layer 1 needs to contain a high-density polyethylene having a density of 0.945 g/cm³ or more. The high-density polyethylene having a density of 0.945 g/cm³ or more is not limited, and a known polyethylene selected from polyethylene described in the following "Polyethylene usable in Resin Layer 1 and Resin Layer 2" can be adopted. In the case wheree the density is 0.945 g/cm³ or more, an excellent effect is exhibited in the VIA test after the fatigue test.

Among 100 parts by weight of the resin constituting the resin layer 1, the content of the high-density polyethylene having a density of 0.945 g/cm³ or more is more than 50 parts by weight. The content is preferably 70 parts by weight or more, more preferably 90 parts by weight or more, and still more preferably 95 parts by weight or more. By using the high-density polyethylene having a density of 0.945 g/cm³ or more, the effect of calcium nitrite as a rust-preventing agent can be maintained for a long period of time during use.

As a resin other than the high-density polyethylene, a polyolefin such as another polyethylene that can be used in combination may be contained. Even in the case where another polyolefin such as polyethylene that can be used in combination is contained, the density of the entire resin component constituting the resin layer 1 is 0.945 g/cm³ or more.

The heat dissipation of calcium nitrite can be suppressed by the combination with the calcium nitrite particles having the average particle diameter described above.

Furthermore, by reducing the thickness of the resin layer 1 in the entire multilayer rust preventive film and combining the high deliquescent properties of calcium nitrite, the volatility of the rust-preventing agent derived from calcium nitrite can be increased even in a high-humidity atmosphere.

Among the high-density polyethylene having a density of 0.945 g/cm³ or more, those having a density of 0.948 g/cm³ or more are preferable, and those having a density of 0.950 g/cm³ or more are more preferable.

### [Resin Layer 2]

### (Resin Constituting Resin Layer 2)

The resin constituting the resin layer 2 may contain a low-density polyethylene and/or a linear low-density polyethylene. Here, the low-density polyethylene and/or the linear low-density polyethylene preferably have a density of 0.925 g/cm³ or less. Such low-density polyethylene and/or linear low-density polyethylene are not limited, and known polyethylene described in the following "Polyethylene usable in Resin Layer 1 and Resin Layer 2" can be adopted. In the case where the density is 0.925 g/cm³ or less, the combination with the resin layer 1 exhibits an excellent effect on the VIA test after the fatigue test.

In 100 parts by weight of the resin constituting the resin layer 2, the content of the low-density polyethylene and/or the linear low-density polyethylene having a density of 0.925 g/cm³ or less is more than 50 parts by weight. The content is preferably 55 parts by weight or more, more preferably 60 parts by weight or more, and still more preferably 65 parts by weight or more. As a resin other than the low-density polyethylene and/or the linear low-density polyethylene, another polyolefin such as polyethylene that can be used in combination may be contained. In addition, it may not be contained. Even in the case where another polyolefin such as polyethylene that can be used in combination is contained, the density of the entire resin constituting the resin layer 2 is preferably 0.925 g/cm³ or less.

From the viewpoint of mechanical strength and processability, the melt flow rate value (MFR) is preferably 0.5 g/10 min or more, more preferably 0.8 g/10 min or more, and still more preferably 1.0 g/10 min or more. The melt flow rate value is also preferably 6.0 g/10 min or less, more preferably 4.0 g/10 min or less, and still more preferably 3.0 g/10 min or less. Within this range, in combination with the resin layer 1, an appropriate viscosity can be exhibited during melt processing while ensuring an appropriate strength, so that molding processability is improved.

Among the low-density polyethylene and/or linear low-density polyethylene having a density of 0.925 g/cm³ or less, those having a density of 0.923 g/cm³ or less are more preferable, and those having a density of 0.921 g/cm³ or less are still more preferable.

### [Polyethylene usable in Resin Layer 1 and Resin Layer 2]

The high-density polyethylene having a density of 0.945 g/cm³ or more, which is a resin constituting the resin layer 1, and the low-density polyethylene and/or the linear low-density polyethylene, which are resins constituting the resin layer 2, can be selected and used from the following polyethylene-based polymers in consideration of the requirements specified in the present invention.

By using the high-density polyethylene having a density of 0.945 g/cm³ or more in the resin layer 1 and using specific calcium nitrite in combination, sufficient rust-preventing property can be exhibited even in the VIA test after the fatigue test.

By using the low-density polyethylene and/or the linear low-density polyethylene in the resin layer 2, heat sealing can be smoothly performed when a bag-shaped article is produced with the resin layer 2 inside.

As such a polyethylene, one or more selected from a polyethylene-based polymer, that is, a homopolymer of ethylene, or a copolymer using ethylene and an olefin other than ethylene as monomers can be adopted.

Examples of the olefin (olefin monomer) other than etylene, constituting the polyethylene-based polymer, include propylene, 1-butene, 3-methyl-1-butene, 1-pentene, 3-methyl-1-pentene, 4-methyl-1-pentene, 1-hexene, and 1-octene. Therefore, examples of the polyolefin-based polymer include an ethylene-based polymer, a propylene-based polymer, a 1-butene-based polymer, a 1-hexene-based polymer, and a 4-methyl-1-pentene-based polymer.

These polyethylene-based polymers may be used alone or in combination of two or more kinds thereof. That is, the polyolefin-based polymer may be a mixture of various polymers. In the case of a mixture, the entire mixture may have a predetermined density.

Among the above, examples of the ethylene-based polymer include an ethylene homopolymer (polyethylene) and a copolymer of ethylene with another monomer (ethylene copolymer). Examples of the ethylene homopolymer include a low-density polyethylene (LDPE), a linear low-density polyethylene (L-LDPE), a medium-density polyethylene (MDPE), and a high-density polyethylene (HDPE).

Specifically, examples of the polyethylene-based polymer include an ethylenepropylene copolymer, an ethylene-1-butene copolymer, an ethylene-1-pentene copolymer, an ethylene-1-hexene copolymer, an ethylene-1-octene copolymer, and an ethylene-4-methyl-1-pentene copolymer.

Note that the ethylene unit (a structural unit derived from ethylene) contained in the polyethylene-based polymer is considered sufficient if it constitutes more than 50% of the total number of structural units (usually 99.999% or less), and can be, for example, 80% to 99.999%, 90% to 99.995%, or 99.0% to 99.990% of the total number of structural units.

### [Other Resins usable in combination in Resin Layer 1 and Resin Layer 2]

As described above, in each of the resin layer 1 and the resin layer 2, in addition to the polyethylene-based polymer essential to each of the resin layers 1 and 2, another polyethylene may be used in combination. Alternatively, it may not be used in combination.

Such polyethylene can be arbitrarily selected from those described above.

In addition, a resin other than polyethylene may be blended as long as the effects of the present invention are not impaired. Alternatively, it may not be blended.

The polyolefin-based resin preferably has a density of 0.880 g/cm³ to 0.945 g/cm³ from the viewpoint of processability. In addition, it preferably has a melt flow rate value (MFR) in a range of 1.0 g/10 min to 10.0 g/10 min from the viewpoint of mechanical strength and processability. Thereby, an appropriate viscosity can be exhibited during melt processing. Accordingly, it is possible to include and coat particulate calcium nitrite in the resin, and it is possible to prevent the rust-preventing agent from falling off from the resin molded product.

### [Amine/Ammonium Salt]

An amine/ammonium salt (amine salt and/or ammonium salt) can be blended in the resin layer 2 in the present invention. Examples of the amine/ammonium salt include an amine/ammonium salt of carboxylic acid used as a rust-preventing agent, and an amine/ammonium salt of carbonic acid or nitrite. If necessary, the amine/ammonium salt may be added to the resin layer 1. Alternatively, it may not be blended.

In the case where the amine/ammonium salt is blended in the resin layer 2, the content of the amine/ammonium salt in 100 parts by weight of the resin layer 2 in which the amine/ammonium salt is blended is preferably 0.10 parts by weight or more, more preferably 0.20 parts by weight or more, and preferably 0.30 parts by weight or more. Further, the content is preferably 10.0 parts by weight or less, more preferably 5.0 parts by weight or less, still more preferably 3.0 parts by weight or less, and most preferably 1.5 parts by weight or less.

In the case where the amine/ammonium salt is added to the resin layer 2, the content of the amine/ammonium salt in 100 parts by weight of the entire multilayer rust preventive film (when the resin layer 3 described below is used, the entire film including the resin layer 3) is preferably 0.05 parts by weight or more, more preferably 0.10 parts by weight or more, and preferably 0.15 parts by weight or more. Further, the content is preferably 5.0 parts by weight or less, more preferably 3.0 parts by weight or less, still more preferably 2.0 parts by weight or less, and most preferably 1.0 parts by weight or less.

### (Carboxylic Acid Amine Salt)

As the carboxylic acid amine salt, a salt formed by bonding cyclohexylamine, diisopropylamine, or dicyclohexylamine as a salt to the same carboxylic acid as the carboxylic acid component that constitutes the carboxylic acid ammonium salt can be selected.

### (Carboxylic Acid Ammonium Salt)

The carboxylic acid ammonium salt may be either an aliphatic carboxylic acid ammonium salt or an aromatic carboxylic acid ammonium salt.

Specific examples of the carboxylic acid ammonium salt include ammonium salts of aliphatic carboxylic acids such as butyric acid, isobutyric acid, methacrylic acid, valeric acid, caproic acid, caprylic acid, capric acid, lauric acid, tridecylic acid, myristic acid, palmitic acid, stearic acid, sorbic acid, oleic acid, oleyl acid, isohexanoic acid, 2-methylpentanoic acid, 2-ethylbutanoic acid, isoheptanoic acid, isooctanoic acid, 2-ethylhexanoic acid, isononanoic acid, isodecanoic acid, 2-propylheptanoic acid, isoundecanoic acid, isododecanoic acid, 2-butyloctanoic acid, oxalic acid, malonic acid, succinic acid, glutaric acid, adipic acid, pimelic acid, cork acid, azelaic acid, sebacic acid, undecanedicarboxylic acid, and dodecanedioic acid; and ammonium salts of aromatic carboxylic acids such as benzoic acid, aminobenzoic acid, salicylic acid, p-tert-butylbenzoic acid, o-sulfobenzoic acid, 1-naphthoic acid, 2-naphthoic acid, phthalic acid, isophthalic acid, terephthalic acid, and cinnamic acid.

### (Amine/Ammonium Salt of Carbonic Acid or Nitrite)

In the carboxylic acid ammonium salt or the amine salt of the carboxylic acid, the carboxylic acid may be changed to carbonic acid or nitrite. Among them, a carbonate of cyclohexylamine (CHC) is preferable.

The amine/ammonium salt may be contained in the resin layer 1 and/or the resin layer 2 in a particulate form, and in the case where the multilayer rust preventive film has other resin layers, the amine/ammonium salt may be contained in the other resin layers. Alternatively, it may not be contained.

The average particle diameter of the amine/ammonium salt is preferably 2 µm or more, more preferably 3 µm or more, and still more preferably 4 µm or more. In addition, the average particle diameter is preferably 60 µm or less, more preferably 50 µm or less, and still more preferably 40 µm or less. The average particle diameter is a value of D50 of the major axis of particles of ammonium salt of carboxylic acid or the like contained in the resin layer.

By containing an amine salt or ammonium salt of carboxylic acid or the like having the specific particle diameter, to control the amount of the generated rust-preventing gas, the rust-preventing effect can be stably maintained over a long period of time.

### (Carboxylic Acid Metal Salt)

The resin layer 1 and the resin layer 2 of the multilayer rust preventive film of the present invention may each independently contain a carboxylic acid metal salt. The carboxylic acid metal salt may be either an aliphatic carboxylic acid metal salt or an aromatic carboxylic acid metal salt.

As the carboxylic acid metal salt, use can be made of one or more kinds from metal salts such as a sodium salt, a potassium salt, a calcium salt, and a magnesium salt of aliphatic carboxylic acids such as isobutyric acid, methacrylic acid, valeric acid, caproic acid, caprylic acid, capric acid, lauric acid, tridecylic acid, myristic acid, palmitic acid, stearic acid, sorbic acid, oleic acid, oleylic acid, isohexanoic acid, 2-methylpentanoic acid, 2-ethylbutanoic acid, isoheptanoic acid, isooctanoic acid, 2-ethylhexanoic acid, isononanoic acid, isodecanoic acid, 2-propylheptanoic acid, isoundecanoic acid, isododecanoic acid, 2-butyloctanoic acid, oxalic acid, malonic acid, succinic acid, glutaric acid, adipic acid, pimelic acid, suberic acid, azelaic acid, sebacic acid, undecanedicarboxylic acid, and dodecanedioic acid, and of aromatic carboxylic acids such as benzoic acid, aminobenzoic acid, salicylic acid, p-tert-butylbenzoic acid, o-sulfobenzoic acid, 1-naphthoic acid, 2-naphthoic acid, phthalic acid, isophthalic acid, terephthalic acid, and cinnamic acid.

In the case where the carboxylic acid metal salt is contained in each of the resin layer 1 and the resin layer 2, the content of the carboxylic acid metal salt is preferably 0.001 to 10 parts by weight and more preferably 0.01 to 5 parts by weight, based on 100 parts by weight of the resin layer to be contained. In the case where the content is less than 0.001 parts by weight, it is difficult to exhibit a sufficient rust-preventing property, and in the case where the content is more than 10 parts by weight, molding becomes difficult.

### (Benzotriazole-based Compound and Tolyltriazole-based Compound)

The resin layer 1 and the resin layer 2 of the multilayer rust preventive film of the present invention may each independently contain a benzotriazole-based compound and/or a tolyltriazole-based compound. Among these, one or more kinds selected from benzotriazole, 4-methylbenzotriazole, 5-methylbenzotriazole, and the like can be used. Alternatively, it may not be contained.

The content of the benzotriazole-based compound and the tolyltriazole-based compound is preferably 0.001 parts by weight to 10 parts by weight and more preferably 0.01 parts by weight to 5 parts by weight, based on 100 parts by weight of the resin layer to be contained. In the case where the content is less than 0.001 parts by weight, it is difficult to further improve the long-term rust-preventing property, and in the case where the content is more than 10 parts by weight, molding becomes difficult.

In addition, the resin layer 1 and the resin layer 2 of the multilayer rust preventive film may each independently contain a known additive that is different from the above-described additives and can be added to a resin, such as an anti-blocking agent (AB agent), a lubricant, an antioxidant, an antistatic agent, an ultraviolet absorber, and a processability improver, as long as the effects of the present invention are not impaired.

Even in the case where an ionomer resin or a functional group-containing polyolefin resin for the purpose of retaining the rust-preventing agent in the resin layer is not blended in the multilayer rust preventive film, the present invention can sufficiently exhibit long-term rust-preventing properties.

### [Resin Layer 3]

A resin layer 3 can be provided on the surface of the resin layer 2 of the multilayer rust preventive film of the present invention.

The resin layer 3 is a layer containing calcium nitrite particles having an average particle diameter of 50 µm or more, and a low-density polyethylene and/or a linear low-density polyethylene.

The resin layer 3 contains calcium nitrite particles having an average particle diameter of 50 µm or more used in the resin layer 1 as a rust-preventing agent.

As the low-density polyethylene and/or the linear low-density polyethylene that can be used in the resin layer 3, it is preferable to use the low-density polyethylene and/or the linear low-density polyethylene that can be used in the resin layer 2.

The calcium nitrite particles having an average particle diameter of 50 µm or more blended in the resin layer 3 can be selected within the range of calcium nitrite particles that can be contained in the resin layer 1.

### [Multilayer Rust Preventive Film]

The multilayer rust preventive film of the present invention may have any structure such as a structure in which a substrate layer is provided on only one surface of the multilayer rust preventive film, a structure in which a substrate layer is provided on both surfaces of the multilayer rust preventive film, and a structure in which a multilayer rust preventive film is laminated on both surfaces of a substrate layer. In addition, the multilayer rust preventive film having any of these structures may be further laminated.

With respect to the total thickness of the multilayer rust preventive film of the present invention, the thickness of the resin layer 1 is preferably 15% or more and preferably 45% or less regardless of the presence or absence of the resin layer 3. Similarly, the resin layer 2 is preferably 55% or more, and preferably 85% or less.

The thickness of the resin layer 1 is preferably 20 µm to 50 µm, the thickness of the resin layer 2 is preferably 50 µm to 95 µm. In the case where the resin layer 3 is provided, the thickness of the resin layer 3 is preferably 10 µm to 30 µm.

The multilayer rust preventive film of the present invention is basically formed by laminating the resin layer 1 and the resin layer 2. In addition, the resin layer 1, the resin layer 2, and the resin layer 3 may be laminated in this order.

The resin layer 3 is a layer containing calcium nitrite particles having an average particle diameter in the same range as that of the calcium nitrite particles contained in the resin layer 1 with an average particle diameter and a content independent of those of the resin layer 1 in the low-density polyethylene and/or the linear low-density polyethylene. At this time, the resin layer 3 preferably has a thickness of 5%~25% with respect to the total thickness of the multilayer rust preventive film formed of the resin layers 1 to 3.

### (Substrate Layer)

A substrate layer can be provided on at least one surface of the multilayer rust preventive film of the present invention.

The substrate layer is provided for the purpose of, for example, imparting strength and imparting gas barrier properties and water vapor barrier properties to the multilayer rust preventive film of the present invention, and improving tactile sensation and appearance. As the material constituting the substrate layer, a material that does not inhibit the rust-preventing effect of the multilayer rust preventive film can be adopted, and a material having excellent adhesion to the resin constituting the multilayer rust preventive film is preferable.

As a material constituting the substrate layer, a resin that can be used for the multilayer rust preventive film, a resin excellent in adhesion to the multilayer rust preventive film, and a woven fabric, a nonwoven fabric, and paper can be adopted.

In the case where a resin is used, various known additives may be contained as the additive contained in the resin layer. The resin layer may be porous or may not be porous.

As a method for forming the substrate layer with such a resin, the substrate layer may be formed at the same time as the multilayer rust preventive film is formed, or a method in which the substrate layer is formed separately from the multilayer rust preventive film and then laminated by a known means can be adopted.

### (Production and Use of Multilayer Rust Preventive Film)

The multilayer rust preventive film is formed by known means such as extrusion molding, inflation molding, vacuum molding, and pressure molding. Among them, it is preferably obtained by inflation molding. The multilayer rust preventive film can have any shape, such as a film, a sheet-like article, a bag-shaped article, a multilayer sheet-like article, a cylinder, or a box. In the case where the substrate film is laminated on the multilayer rust preventive film, the surface on the side of the multilayer rust preventive film may be positioned inside the container or the packaging sheet, that is, on the side of the article to be housed or packed and rust-prevented.

By containing the calcium nitrite particles having the specific particle diameter, the amount of the generated rust-preventing gas is controlled, and as a result, the rust-preventing effect can be stably maintained over a long period of time.

Furthermore, by adopting a plurality of resin layers, moisture permeates little by little from the outside air in contact with the surface of the resin layer 1 toward the inside, and thus the rust-preventing gas is generated also little by little. Therefore, a high rust-preventing effect can be more stably maintained over a long period of time without adding a rust releasing agent such as a carboxylic acid-modified polyolefin polymer, a wax, a nonionic surfactant, or an inorganic porous material. The rust releasing agent such as a carboxylic acid-modified polyolefin polymer, a wax, a nonionic surfactant, or an inorganic porous material may be added.

In addition, as the article to be rust-prevented, a wide range of articles such as cast iron can be used.

### Examples

The present invention will be described more specifically with reference to the following Examples and Comparative Examples.

The Examples show one embodiment of the present invention, and the present invention is not limited thereto.

The density and MFR of each resin constituting each resin layer in the table are as follows.
Resin HDPE has a density of 0.951 g/cm³ and an MFR of 5.5 g/10 min
Resin HDPE2 has a density of 0.964 g/cm³ and an MFR of 5.2 g/10 min
Resin HDPE3 has a density of 0.938 g/cm³ and an MFR of 0.2 g/10 min
Resin LDPE has a density of 0.920 g/cm³ and an MFR of 2.0 g/10 min
Resin LLDPE has a density of 0.903 g/cm³ and an MFR of 3.8 g/10 min
CHC is a carbonate of cyclohexylamine.

Respective forming mixtures were prepared by stirring and mixing by hand blending so as to form the multilayer rust preventive films of Examples and Comparative Examples shown in the table. Respective tubular multilayer films were produced from these mixtures by an inflation extruder.

Calcium nitrite (Ca nitrite), sodium nitrite (Na nitrite), and potassium nitrite (K nitrite) were obtained by pulverizing and classifying commercially available ones under arbitrary conditions.

Test method of VIA after Fatigue test (performed according to MIL-STD-3010C 5.4.1.)

### (Fatigue Test)

A multilayer rust preventive film having a length of 8 inches and a width of 2 inches was vertically placed in a beaker. The beaker was left to stand in a space at a temperature of 60°C and a humidity of 50% for 288 hours according to MIL-STD-3010C 5.4.1. After standing, two multilayer rust preventive films each having a length of 6 inches and a width of 1 inch were obtained from one multilayer rust preventive film having a length of 8 inches and a width of 2 inches.

### (VIA Test Method after Fatigue Test)

A SAE1018 plate having a diameter of 15.9 mm and a height of 12.7 mm was prepared, and the surface of the SAE1018 plate was polished by lateral rubbing with # 240. Next, the plate was polished by vertical rubbing with # 400. The polished surface was washed with primary methanol and wiped with a professional wipe.

The VIA test after the fatigue test was carried out in accordance with MIL-STD-3010C 5.4.1, which is MILITARY STANDARD, USA. Note that SAE1018 was adopted instead of SAE1010 in MIL-STD-3010C 5.4.1.

### (Evaluation of Surface of Test Result of VIA Test after Fatigue Test)

Each test surface (a circular surface having a diameter of 15.9 mm of the SAE1018 plate) was enlarged 10 times and inspected. Each test surface was evaluated based on the number of corrosion spots observed. Further, each test surface was enlarged 40 times, and the presence or absence of spots exceeding a diameter of 300 µm was confirmed.

### (Evaluation Standard)

A: Three or less spots and no spots having a diameter of more than 300 µm (fit)
B: There are four or more spots or a spot having a diameter of more than 300 µm (unsuitable)
C: As a whole, rust is present (unsuitable)

### [Space Test]

A test piece described in the following was hung with a nylon fishing line within a frame measuring 100 mm in length × 100 mm in width × 150 mm in height, and the frame was gusset-sealed with the prepared film and sealed up.

This test form was placed in a test environment described below for a specified period of time, and then the state of surface rust was evaluated based on the rust-preventing evaluation standard described in the following.

### (Test Piece)

Cast iron (JIS G 5501), size: φ 30 mm × 8 mm

### (Test Environment)

25°C, 70% RH: 4 hours
50°C, 95% RH: 4 hours
Set moving time: 2 hours, total 12 hours/1 cycle
Evaluation
Number of days: 7 days (14 cycles)

### (Rust-Preventing Evaluation Standard of Space Test)

A: No rust or color change
B: Spotty rust or slight discoloration
C: Rust or discoloration occurs in less than 10% of the area of the test piece

**[Table 1]**

| Film | | Ratio of Layer Thickness | | | Resin | Rust-preventing agent concentration (parts by weight) | | | | |
|---|---|---|---|---|---|---|---|---|---|---|
| | Thickness (µm) | | | | | Ca nitrite | Na nitrite | K nitrite | CHC | Ammonium adipate |
| Ex. 1 | 115 | Resin Layer 1 | Outer Layer | 40 | HDPE | 1.3 | | | | |
| | | Resin Layer 2 | Inner Layer | 60 | LDPE | | | | | |
| Ex. 2 | 115 | Resin Layer 1 | Outer Layer | 40 | HDPE | 1.3 | | | | |
| | | Resin Layer 2 | Inner Layer | 60 | LLDPE | | | | | |
| Ex. 3 | 115 | Resin Layer 1 | Outer Layer | 40 | HDPE | 1.3 | | | | |
| | | Resin Layer 2 | Inner Layer | 60 | LDPE | | | | | |
| Ex. 4 | 115 | Resin Layer 1 | Outer Layer | 40 | HDPE | 1.3 | | | | |
| | | Resin Layer 2 | Inner Layer | 60 | LDPE | | | | | 1.0 |
| Ex. 5 | 115 | Resin Layer 1 | Outer Layer | 40 | HDPE | 1.3 | | | | |
| | | Resin Layer 2 | Inner Layer | 60 | LDPE | | | | | 1.0 |
| Ex. 6 | 115 | Resin Layer 1 | Outer Layer | 40 | HDPE | 1.3 | | | | |
| | | Resin Layer 2 | Inner Layer | 60 | LDPE | | | | 1.0 | |
| Ex. 7 | 115 | Resin Layer 1 | Outer Layer | 40 | HDPE | 1.3 | | | | |
| | | Resin Layer 2 | Inner Layer | 60 | LDPE | | | | | 1.0 |
| Ex. 8 | 115 | Resin Layer 1 | Outer Layer | 40 | HDPE | 1.3 | | | | |
| | | Resin Layer 2 | Inner Layer | 60 | LLDPE | | | | | 1.0 |
| Ex. 9 | 115 | Resin Layer 1 | Outer Layer | 20 | HDPE | 2.4 | | | | |
| | | Resin Layer 2 | Inner Layer | 80 | LDPE | | | | | 1.0 |
| Ex. 10 | 115 | Resin Layer 1 | Outer Layer | 20 | HDPE | 2.4 | | | | |
| | | Resin Layer 2 | Inner Layer | 80 | LDPE | | | | | 1.0 |
| Ex. 11 | 115 | Resin Layer 1 | Outer Layer | 20 | HDPE | 2.4 | | | | |
| | | Resin Layer 2 | Inner Layer | 80 | LLDPE | | | | | 1.0 |
| Ex. 12 | 115 | Resin Layer 1 | Outer Layer | 40 | HDPE2 | 1.3 | | | | |
| | | Resin Layer 2 | Inner Layer | 60 | LDPE | | | | | 1.0 |
| Ex. 13 | 115 | Resin Layer 1 | Outer Layer | 40 | HDPE2 | 1.3 | | | | |
| | | Resin Layer 2 | Inner Layer | 60 | LDPE | | | | | 1.0 |
| Ex. 14 | 115 | Resin Layer 1 | Outer Layer | 40 | HDPE2 | 1.3 | | | | |
| | | Resin Layer 2 | Inner Layer | 60 | LLDPE | | | | | 1.0 |
| Ex. 15 | 115 | Resin Layer 1 | Outer Layer | 40 | HDPE2 | 1.3 | | | | |
| | | Resin Layer 2 | Inner Layer | 60 | LDPE | | | | | 1.0 |
| Ex. 16 | 115 | Resin Layer 1 | Outer layer | 40 | HDPE | 1.2 | | | | |
| | | Resin Layer 2 | Mid Layer | 45 | LDPE | | | | | 1.1 |
| | | Resin Layer 3 | Inner Layer | 15 | LDPE | 0.3 | | | | |
| Ex. 17 | 115 | Resin Layer 1 | Outer layer | 20 | HDPE | 1.3 | | | | |
| | | Resin Layer 2 | Mid Layer | 60 | LDPE | | | | | 0.9 |
| | | Resin Layer 3 | Inner Layer | 20 | LDPE | 1.3 | | | | |
| Ex. 18 | 115 | Resin Layer 1 | Outer layer | 40 | HDPE | 0.6 | | | | |
| | | Resin Layer 2 | Mid Layer | 40 | LDPE | | | | | 1.3 |
| | | Resin Layer 3 | Inner Layer | 20 | LLDPE | 1.3 | | | | |
| Ex. 19 | 115 | Resin Layer 1 | Outer layer | 40 | HDPE | 0.6 | | | | |
| | | Resin Layer 2 | Mid Layer | 40 | LLDPE | | | | | 1.3 |
| | | Resin Layer 3 | Inner Layer | 20 | LDPE | 1.3 | | | | |

**[Table 1 (Continued)]**

| | Average particle diameter of metal nitrite | VIA test after fatigue test | Space test |
|---|---|---|---|
| Ex. 1 | 120 µm | A | B |
| Ex. 2 | 100 µm | A | B |
| Ex. 3 | 80 µm | A | B |
| Ex. 4 | 120 µm | A | A |
| Ex. 5 | 100 µm | A | A |
| Ex. 6 | 80 µm | A | A |
| Ex. 7 | 80 µm | A | A |
| Ex. 8 | 80 µm | A | A |
| Ex. 9 | 60 µm | A | A |
| Ex. 10 | 100 µm | A | A |
| Ex. 11 | 60 µm | A | A |
| Ex. 12 | 120 µm | A | A |
| Ex. 13 | 100 µm | A | A |
| Ex. 14 | 70 µm | A | A |
| Ex. 15 | 60 µm | A | A |
| Ex. 16 | 100 µm | A | A |
| Ex. 17 | 100 µm | A | A |
| Ex. 18 | 80 µm | A | A |
| Ex. 19 | 60 µm | A | A |

**[Table 2]**

| Film | | Ratio of Layer Thickness | | | Resin | Rust-preventing agent concentration (parts by weight) | | | | |
|---|---|---|---|---|---|---|---|---|---|---|
| | Thickness (µm) | | | | | Ca nitrite | Na nitrite | K nitrite | CHC | Ammonium adipate |
| Comp. Ex. 1 | 115 | Resin Layer 1 | Outer Layer | 40 | HDPE | | 1.3 | | | |
| | | Resin Layer 2 | Inner Layer | 60 | LDPE | | | | | |
| Comp. Ex. 2 | 115 | Resin Layer 1 | Outer Layer | 40 | HDPE | | | 1.3 | | |
| | | Resin Layer 2 | Inner Layer | 60 | LDPE | | | | | |
| Comp. Ex. 3 | 115 | Resin Layer 1 | Outer Layer | 40 | HDPE | 1.3 | | | | |
| | | Resin Layer 2 | Inner Layer | 60 | LDPE | | | | | |
| Comp. Ex. 4 | 115 | Resin Layer 1 | Outer Layer | 40 | HDPE | 1.3 | | | | |
| | | Resin Layer 2 | Inner Layer | 60 | LDPE | | | | | |
| Comp. Ex. 5 | 115 | Resin Layer 1 | Outer Layer | 60 | HDPE | 0.8 | | | | |
| | | Resin Layer 2 | Inner Layer | 40 | LLPE | | | | | |
| Comp. Ex. 6 | 115 | Resin Layer 1 | Outer Layer | 40 | HDPE | | 1.3 | | | |
| | | Resin Layer 2 | Inner Layer | 60 | LDPE | | | | | 0.9 |
| Comp. Ex. 7 | 115 | Resin Layer 1 | Outer Layer | 40 | HDPE3 | 1.2 | | | | |
| | | Resin Layer 2 | Inner Layer | 60 | LDPE | | | | 0.9 | |
| Comp. Ex. 8 | 115 | Resin Layer 1 | Outer Layer | 40 | HDPE | | | | | |
| | | Resin Layer 2 | Inner Layer | 60 | LDPE | | | | | 1.7 |
| Comp. Ex. 9 | 115 | Resin Layer 1 | Outer Layer | 20 | HDPE | | | | | 2.5 |
| | | Resin Layer 2 | Mid Layer | 60 | LDPE | 0.8 | | | | |
| | | Resin Layer 3 | Inner layer | 20 | HDPE | | | | | |

**[Table 2 (Continued)]**

| | Average particle diameter of metal nitrite | VIA test after fatigue test | Space test |
|---|---|---|---|
| Comp. Ex. 1 | 80 µm | B | C |
| Comp. Ex. 2 | 80 µm | B | C |
| Comp. Ex. 3 | 40 µm | B | B |
| Comp. Ex. 4 | 20 µm | B | B |
| Comp. Ex. 5 | 30 µm | B | B |
| Comp. Ex. 6 | 10 µm | C | B |
| Comp. Ex. 7 | 100 µm | B | B |
| Comp. Ex. 8 | 100 µm | C | C |
| Comp. Ex. 9 | 100 µm | C | C |

According to each Example, the results of the VIA test after the fatigue test were good. On the other hand, according to each Comparative Example, the results of the VIA test after the fatigue test were insufficient.

According to Examples 1 to 3, the result of the space test for 7 days was B. On the other hand, the result of the space test for 7 days of Examples 4 to 19 in which the amine/ammonium salt was contained in the resin layer 2 was A.

Comparative Examples 1, 2 and 6 are examples in which the resin layer 1 contains Na nitrite or K nitrite. These Comparative Examples, i.e., the case of using a Na salt or a K salt, showed the results of the VIA test after the fatigue test inferior to those of the Examples, i.e., the case of using Ca nitrite, although they were common in that they used nitrites. In particular, in Comparative Examples 1 and 2 having the resin layer 2 containing no rust-preventing agent, the results of the space test were also poor.

Comparative Example 3 to 5 are examples in which the average particle diameter of Ca nitrite contained in the resin layer 1 is less than 50 µm. Also in these cases, the results of the VIA test after the fatigue test were poor.

Comparative Example 7 is an example in which the density of the high-density polyethylene is 0.938 g/cm³, which does not satisfy the range of the density in the present invention. In this case, the result of the VIA test after the fatigue test was insufficient.

Comparative Example 8 is an example in which the resin layer 1 does not contain Ca nitrite and the resin layer 2 contains ammonium adipate as a rust-preventing agent. Comparative Example 9 is an example in which the resin layer 2 contains Ca nitrite and the resin layer 1 contains ammonium adipate. In these cases, the results of the VIA test after the fatigue test and the space test were poor.

## Claims

1. A multilayer rust preventive film comprising the following resin layer 1 and resin layer 2:
resin layer 1: a layer containing calcium nitrite particles having an average particle diameter of 50 µm or more and a high-density polyethylene having a density of 0.945 g/cm³ or more, and
resin layer 2: a layer containing a low-density polyethylene and/or a linear low-density polyethylene.

2. The multilayer rust preventive film according to claim 1, comprising the following resin layer 3 at the resin layer 2 side:
resin layer 3: a layer containing calcium nitrite particles having an average particle diameter of 50 µm or more and a low-density polyethylene and/or a linear low-density polyethylene.

3. The multilayer rust preventive film according to claim 1 or 2, wherein
the resin layer 2 contains an amine/ammonium salt.

4. The multilayer rust preventive film according to claim 1 or 2, wherein
the resin layer 1 has a thickness of 15 to 45 when the thickness of the multilayer rust preventive film is 100.
